# EUROPÄISCHE PATENTSCHRIFT

(11) **EP 3 673 158 B1**
(45) Veröffentlichungstag und Bekanntmachung des Hinweises auf die Patenterteilung: **07.09.2022**
(21) Anmeldenummer: 18795416.9
(22) Anmeldetag: 23.10.2018
(51) Int. Cl.: F01N 3/10, F01N 3/20, F01N 3/021, F01N 13/00

(54) **FAHRZEUG, INSBESONDERE GELÄNDEGÄNGIGES FAHRZEUG, MIT EINER ABGASNACHBEHANDLUNGSEINRICHTUNG**
VEHICLE, IN PARTICULAR OFF-ROAD VEHICLE, COMPRISING AN EXHAUST GAS AFTERTREATMENT DEVICE
VÉHICULE, EN PARTICULIER VÉHICULE TOUT-TERRAIN, COMPRENANT UN DISPOSITIF DE POST-TRAITEMENT DE GAZ D'ÉCHAPPEMENT

(30) Priorität: 25.10.2017 DE 102017124942
(43) Veröffentlichungstag der Anmeldung: 01.07.2020
(73) Patentinhaber: MAN Truck & Bus AG, 80995 München (DE); AGCO International GmbH, 8212 Neuhausen am Rheinfall (CH)
(72) Erfinder: FEDO, Serhij, 90419 Nürnberg (DE); DANHOF, Stefan, 87616 Marktoberdorf (DE); FREYTAG, Erich, 86987 Sachsenried (DE)
(74) Vertreter: v. Bezold & Partner Patentanwälte - PartG mbB
(86) Internationale Anmeldenummer: PCT/EP2018/078978
(87) Internationale Veröffentlichungsnummer: WO 2019/081475

(56) Entgegenhaltungen:
- EP-A1- 2 975 236
- WO-A1-2015/012168
- WO-A1-2015/033480
- WO-A1-2015/093375
- US-A1- 2016 082 830

## Beschreibung

Die Erfindung betrifft ein Fahrzeug, insbesondere ein geländegängiges Fahrzeug, mit einer Fahrerkabine, einem Verbrennungsmotor und einer Abgasnachbehandlungseinrichtung.

Geländegängige Fahrzeuge wie beispielsweise Traktoren mit einer Abgasnachbehandlungseinrichtung sind aus dem Stand der Technik bekannt. So offenbart die Offenlegungsschrift WO 2010/069807 A1 einen Traktor mit einem Abgasnachbehandlungssystem, das sich innerhalb der den Verbrennungsmotor abdeckenden Motorhaube befindet. Nachteilig hieran ist, dass die Wärme des Abgasnachbehandlungssystems Motorkomponenten sowie die Motorhaube, insbesondere wenn als Leichtbauhaube aus Kunststoff ausgeführt, beschädigen kann. Die Offenlegungsschrift GB 2465151 A offenbart ein geländegängiges Fahrzeug mit einem Abgasnachbehandlungssystem, das eine unterhalb der Motorhaube angeordnete Abgasnachbehandlungseinheit sowie einen nachgeschalteten SCR-Katalysator umfasst. Die unter der Motorhaube angeordnete Abgasnachbehandlungseinheit kann wiederum zu den zuvor beschriebenen wärmebedingten Nachteilen führen.

Die Offenlegungsschrift WO 2010/069806 A1 offenbart ebenfalls einen Traktor mit einem Abgasnachbehandlungssystem. Das Abgasnachbehandlungssystem ist außerhalb der den Verbrennungsmotor abdeckenden Motorhaube angeordnet und kann einen Oxidationskatalysator, einen NOx-Katalysator und einen NOx-, HC-, NH3-Absorber, die in Reihe geschaltet sind, umfassen. Der Aufbau und die Funktionsweise dieses Abgasnachbehandlungssystem können zur Erfüllung für zunehmend strengere Abgasnormen nicht optimal sein. Die Offenlegungsschrift US 2012/0227376 A1 offenbart ein geländegängiges Fahrzeug mit einem Abgasnachbehandlungssystem, das oberhalb des Verbrennungsmotors angeordnet ist. Dies kann die Sicht des Fahrers einschränken. Das Dokument US2016/082830 A1 offenbart ein weiteres Abgasnachbehandlungssystem.

Es ist somit eine Aufgabe der Erfindung, eine verbesserte Abgasnachbehandlungseinrichtung und ein Fahrzeug mit einer solchen Abgasnachbehandlungseinrichtung bereitzustellen, mit denen Nachteile herkömmlicher Techniken vermieden werden können. Die Aufgabe der Erfindung ist es insbesondere, eine Abgasnachbehandlungseinrichtung für ein Fahrzeug bereitzustellen, die flexibel an unterschiedlichen Verbrennungsmotoren anordenbar ist und ferner so am Fahrzeug anordenbar ist, dass ein wärmebedingtes Einwirkungen der Abgasnachbehandlungseinrichtung auf die Motorkomponenten und die Motorhaube möglichst gering ausfällt. Ferner soll die Beeinträchtigung der Fahrersicht durch die Abgasnachbehandlungseinrichtung möglichst gering ausfallen.

Diese Aufgaben werden durch ein Fahrzeug mit einer Abgasnachbehandlungseinrichtung mit den Merkmalen des unabhängigen Anspruchs gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß allgemeinem Gesichtspunkt der Erfindung wird ein Fahrzeug mit einer Fahrerkabine, einem Verbrennungsmotor und einer Abgasnachbehandlungseinrichtung bereitgestellt. Das Fahrzeug kann ein Nutzfahrzeug, beispielsweise ein Lastkraftwagen oder ein geländegängiges Fahrzeug, insbesondere ein Traktor oder eine Landmaschine sein.

Die Abgasnachbehandlungseinrichtung umfasst hierbei in an sich bekannter Weise einen Partikelfilter, einen Oxidationskatalysator, eine Mischeinrichtung zur Vermischung von Abgas und Reduktionsmittel und einen SCR-Katalysator. Der Partikelfilter ist vorzugsweise ein Diesel-Partikelfilter und/oder vorzugsweise dazu ausgeführt, in dem Abgas enthaltenen Feinstaub (PM) zu fangen. Der Oxidationskatalysator ist vorzugsweise ein Diesel-Oxidationskatalysator und/oder vorzugsweise dazu ausgeführt, Kohlenstoffmonoxid und Kohlenwasserstoff zu oxidieren, welche in dem Abgas enthalten sind. Die Mischeinrichtung ist in Abgasströmungsrichtung nachfolgend zu dem Partikelfilter und dem Oxidationskatalysator angeordnet. Der SCR-Katalysator ist in Abgasströmungsrichtung nachfolgend zu der Mischeinrichtung angeordnet.

Die Abgasnachbehandlungseinrichtung ist, insbesondere die Anordnung aus dem Partikelfilter, dem Oxidationskatalysator, der Mischeinrichtung und dem SCR-Katalysator, außerhalb einer den Verbrennungsmotor abdeckenden Haube angeordnet. Dies ermöglicht ein effizientes Abführen der Wärme der Abgasnachbehandlungseinrichtung an die Umwelt und ein einfaches Nachrüsten bestehender Verbrennungsmotor-Designs mit der Nachbehandlungseinrichtung, da die Anordnung der Komponenten des Verbrennungsmotors und die Abmaße der Motorhaube nicht verändert werden müssen.

Erfindungsgemäß ist die Mischeinrichtung, in Vorwärtsfahrtrichtung des Fahrzeugs gesehen, vor dem SCR-Katalysator angeordnet. Eine Anordnung der Mischeinrichtung, in Vorwärtsfahrtrichtung des Fahrzeugs gesehen, vor dem SCR-Katalysator bedeutet, dass die Mischeinrichtung näher an der Vorderseite des Fahrzeugs angeordnet ist als der SCR-Katalysator. Die Vorderseite des Fahrzeugs ist diejenige Seite des Fahrzeugs, an der ein der Fahrerkabine abgewandter bzw. gegenüberliegender Endbereich der Haube endet. Die Vorwärtsfahrtrichtung ist diejenige, bei welcher die Haube und/oder die Vorderseite des Fahrzeugs in Bezug auf die Fahrerkabine in Fahrtrichtung vorne liegt. Ferner kann die Mischeinrichtung an einer der Fahrzeugvorderseite zugewandten Seite des SCR-Katalysators angeordnet sein. Mit anderen Worten kann die Mischeinrichtung an derjenigen Seite des SCR-Katalysators angeordnet, insbesondere befestigt sein, die im montierten Zustand des SCR-Katalysators am Fahrzeug der Fahrzeugvorderseite zugewandt ist. Insbesondere kann die Mischeinrichtung so an einer der Fahrzeugvorderseite zugewandten Seite des SCR-Katalysators angeordnet sein, dass eine Sicht auf die Mischeinrichtung von einem Fahrer, der in der Fahrerkabine eine normale Sitzposition einnimmt, durch den SCR-Katalysator zumindest teilweise, vorzugsweise vollständig verdeckt ist. Diese Ausführungsformen sind besonders vorteilhaft, weil dadurch die Mischeinrichtung außerhalb des Sichtfeldes des Fahrers angeordnet werden kann und auf diese Weise dessen Sicht auf die Fahrbahn oder die im vorderen Bereich des Fahrzeugs angehängten Anbaugeräte nicht oder zumindest kaum beeinträchtigt ist.

Ferner können der Partikelfilter und der Oxidationskatalysator in ein Abgasnachbehandlungsmodul integriert sein, welches nachfolgend als DOC/DPF-Abgasnachbehandlungsmodul bezeichnet wird. Dies bedeutet, dass der Partikelfilter und der Oxidationskatalysator baulich in ein Kombimodul integriert sind, d. h. von einem gemeinsamen Gehäuse umgeben sind. Dies verringert den Montage- und den Verrohrungsaufwand.

Eine besonders vorteilhafte Ausführungsform sieht vor, dass der Partikelfilter und der Oxidationskatalysator, z. B. in Form des DOC/DPF-Abgasnachbehandlungsmoduls, unterhalb des SCR-Katalysators angeordnet sind, insbesondere an einer Unterseite des SCR-Katalysators angeordnet und/oder befestigt sind. Hierdurch kann eine kompakte Anordnung der Abgasnachbehandlungseinrichtung realisiert werden, bei der der Partikelfilter und der Oxidationskatalysator nicht im Sichtfeld des Fahrers liegen.

Der Partikelfilter und der Oxidationskatalysator können beispielsweise über ein Trägerelement (Montagehalter) an der Unterseite des SCR-Katalysators befestigt sein. Das Trägerelement kann dasselbe Bauteil sein, an dem auch der SCR-Katalysator gehaltert ist. Das Trägerelement kann am Fahrzeugrahmen befestigt sein. Das Trägerelement kann eine Lochstruktur oder ein Lochmuster aufweisen und vorzugsweise aus einem metallischen Werkstoff gefertigt sein, z. B. ein Gussteil sein.

Gemäß einer weiteren Ausführungsform ist die Abgasnachbehandlungseinrichtung, insbesondere die Anordnung aus dem Partikelfilter, dem Oxidationskatalysator, der Mischeinrichtung und dem SCR-Katalysator, seitlich beabstandet zur Haube des Verbrennungsmotors angeordnet. Vorteilhafterweise ist die seitliche Anordnung derart, dass eine Sichtlinie ermöglicht wird, welche vom Kopf eines Fahrers, der in der Fahrerkabine eine normale Sitzposition einnimmt, ausgeht und an der inneren unteren, d. h. in Bodenkontakt stehenden, Kante des Vorderrades endet. Ist die Abgasnachbehandlungseinrichtung, in Vorwärtsfahrtrichtung gesehen, seitlich rechts vom Verbrennungsmotor angeordnet, endet die Sichtlinie an der inneren, unteren Kante des rechten Vorderrades. Mit anderen Worten ist die Abgasnachbehandlungseinrichtung derart seitlich am Verbrennungsmotor angebracht, dass der Fahrer die untere Kante des Vorderrades sieht. Dies ist für die Fahrt in Reihenkulturen besonders vorteilhaft.

Vorstehend wurde bereits erwähnt, dass der Partikelfilter und der Oxidationskatalysator in ein DOC/DPF-Abgasnachbehandlungsmodul integriert sein können. Gemäß einer vorteilhaften Variante dieses Aspekts kann das DOC/DPF-Abgasnachbehandlungsmodul über einen Kompensator mit einem Auslass einer Turbine eines Abgas-Turboladers fluidisch verbunden oder über einen Kompensator stromabwärts mit einem Diffusors fluidisch verbunden sein, der am Auslass einer Turbine eines Abgasturboladers angeordnet ist. Das DOC/DPF-Abgasnachbehandlungsmodul kann in diesem Sinne somit über den Kompensator unmittelbar an den Abgas-Turbolader angeschlossen sein, was vorteilhaft für die Sichtbarkeit auf das Vorderrad ist.

Ein Kompensator, auch als Abgaskompensator oder Metallbalgkompensator bezeichnet, ist bekanntermaßen ein Bauteil zum Ausgleich von Bewegungen in Rohrleitungen, insbesondere aufgrund von Schwingungen oder Relativbewegungen, bei thermischen Längenänderungen etc., das als flexibles Leitungselement zum Einsatz kommt. Die Kompensation erfolgt dabei mechanisch über einen elastischen Balg des Kompensators, der insbesondere als mehrlagiger Balg ausgeführt sein kann. Derartige Kompensatoren bestehen üblicherweise aus einer Mehrzahl von aufeinandersitzenden, ringgewellten Balglagen, die mit den Abgasleitungsrohren gasdicht verbunden sind.

Gemäß einem weiteren Aspekt kann die Abgasströmungsrichtung beim Durchlaufen des Partikelfilters und des Oxidationsfilters im Wesentlichen in horizontaler Richtung und senkrecht zur Vorwärtsfahrtrichtung gerichtet sein, insbesondere von der Fahrzeuginnenseite hin zur Fahrzeugaußenseite gerichtet sein. Ferner kann die Abgasströmungsrichtung beim Durchlaufen des SCR-Katalysators im Wesentlichen in vertikaler Richtung hin zur Fahrzeugoberseite gerichtet sein. Ferner kann die Abgasströmungsrichtung beim Durchlaufen der Mischeinrichtung einen u-förmigen Verlauf aufweisen. Diese Aspekte sind besonders vorteilhaft, um einerseits eine kompakte Anordnung der Module der Abgasnachbehandlungseinrichtung zu erzielen und andererseits gleichzeitig den Strömungsweg ausreichend lang zu gestalten, um beispielsweise eine gute Durchmischung und Erwärmung des Abgases vor dem SCR-Katalysator zu erzielen.

Die Mischeinrichtung dient zur Vermischung von Abgas und Reduktionsmittel. Die Mischeinrichtung kann als Drall-Mischer oder als Rohr-Mischer ausgeführt sein. Die Mischeinrichtung kann zur Durchmischung von Abgas und Reduktionsmittel Mittel aufweisen, die eine Durchmischung von Abgas und eingedüstem Reduktionsmittel fördern und gleichzeitig eine Wandbenetzung mit Reduktionsmittel vermeiden oder zumindest reduzieren. Derartige Mittel können umfassen: ein Drallelement, ein Prallelement und/oder einen Hohlkörper mit einer perforierten Mantelfläche. Derartige Mischeinrichtungen sind aus dem Stand der Technik bekannt und müssen hier nicht näher beschrieben werden.

Die Abgasnachbehandlungseinrichtung weist vorzugsweise ein erstes Rohr auf, über welches das aus dem Partikelfilter und dem Oxidationsfilter austretende Abgas zum Einlass der Mischeinrichtung geleitet wird. Die Abgasnachbehandlungseinrichtung weist vorzugsweise ein zweites Rohr auf, über welches das aus der Mischeinrichtung austretende Gas zum Einlass des SCR-Katalysators geleitet wird.

Die Abgasnachbehandlungseinrichtung kann einen Injektor zum Eindüsen eines Reduktionsmittels aufweisen. Vorzugsweise ist der Injektor an der Mischeinrichtung angeordnet und dazu ausgebildet, ein Reduktionsmittel in die Mischeinrichtung einzudüsen. Das Reduktionsmittel kann eine wässrige Harnstofflösung sein. Eine vorteilhafte Ausführungsvariante sieht hierbei vor, dass der Injektor an einem oberen Endbereich der Mischeinrichtung angeordnet ist und/oder dass der Injektor derart an der Mischeinrichtung angeordnet ist, dass das Reduktionsmittel in einem im Wesentlichen nach unten strömenden Abgasstrom eingedüst wird. Dies ist vorteilhaft für die Durchmischung von Abgas und Reduktionsmittel.

Gemäß einer weiteren bevorzugten Ausführungsvariante ist die Mischeinrichtung oder ein Gehäuse der Mischeinrichtung lediglich im Bereich einer oberen Hälfte außen am SCR-Katalysator-Gehäuse angeordnet, insbesondere bei Ausführung der Mischeinrichtung als Drall-Mischer. Diese Anordnung ist besonders vorteilhaft, da dadurch bei kompakter Bauweise gleichzeitig ein Freiraum zwischen der Abgasnachbehandlungseinrichtung und benachbarten Rad und Kotflügel bereitgestellt wird, der eine ausreichende Radkinematik ermöglicht.

Ferner kann die Abgasströmungsrichtung beim Eintritt in und beim Ausstritt aus der Mischeinrichtung im Wesentlichen in vertikaler Richtung verlaufen. Hierbei können der der Abgaseinlass und der Abgasauslass der Mischeinrichtung an der Unterseite der Mischeinrichtung angeordnet sein, d. h. die Abgasströmungsrichtung beim Einlass und Auslass ist entgegengesetzt. Bei dieser Variante weist die Abgasströmungsrichtung einen u-förmigen Verlauf innerhalb der Mischeinrichtung auf, wobei die Schenkel des u-förmigen Verlaufs nach unten zeigen.

Es wird betont, dass jedoch auch andere Anordnungen der Mischeinrichtung an der Vorderseite des SCR-Katalysators möglich sind. Beispielsweise kann die Mischeinrichtung in einem unteren Bereich außen am SCR-Katalysator-Gehäuse angeordnet sein. Ferner kann die Abgasströmungsrichtung beim Eintritt in und beim Ausstritt aus der Mischeinrichtung im Wesentlichen in horizontaler Richtung verlaufen. Hierbei kann der Abgaseinlass und der Abgasauslass der Mischeinrichtung an einer zur Fahrzeugaußenseite hin zugewandten Seite der Mischeinrichtung angeordnet sein, d. h. die Abgasströmungsrichtung beim Einlass und Auslass ist wiederum entgegengesetzt. Bei dieser Variante weist die Abgasströmungsrichtung einen u-förmigen Verlauf innerhalb der Mischeinrichtung auf, wobei die Schenkel des u-förmigen Verlaufs in horizontaler Richtung seitlich nach außen zeigen.

Gemäß einem weiteren Aspekt kann die Abgasnachbehandlungseinrichtung, in Vorwärtsfahrtrichtung gesehen, seitlich, z. B. rechts oder links, von der Haube angeordnet sein und/oder schräg vor der vorderen rechten Ecksäule der Fahrerkabine angeordnet sein. Dies ermöglicht eine gute Sicht des Fahrers durch den unteren vorderen Bereich der Seitenfenster der Fahrerkabine.

Gemäß einem weiteren Aspekt können ein oberer Endbereich des SCR-Katalysators und ein oberer Bereich der Mischeinrichtung tiefer oder im Wesentlichen auf gleicher Höhe als/wie ein hinterer oberer Endbereich der Haube angeordnet sein, insbesondere derart, dass eine Sichtlinie ermöglicht wird, welche vom Kopf eines eine in der Fahrerkabine normale Sitzposition einnehmenden Fahrers ausgeht und eine nach vorn abschüssige Tangente auf der Haube bildet, die an einer Stelle die Fahrbahn trifft, die in einem horizontalen Abstand von <= 12 m von der Sitzposition des Fahrers entfernt ist. Dies bietet den Vorteil, dass die Sicht des Fahrer nach vorne auf die Fahrbahn verbessert wird.

Die Abgasnachbehandlungseinrichtung soll auch als separater Gegenstand, unabhängig vom Fahrzeug, offenbart und beanspruchbar sein, wie hierin beschrieben. Die vorgenannten Merkmale und Aspekte der Abgasnachbehandlungseinrichtung, die Bezug auf das Fahrzeug nehmen, sind dann so zu verstehen, dass diese im am Fahrzeug montierten Zustand der Abgasnachbehandlungseinrichtung erfüllt sind.

In vorliegendem Zusammenhang werden Begriffe wie "vorne", "hinten", "oben" und "unten" sowie Begriffe mit ähnlichem Bedeutungsinhalt einschließlich der Begriffe "rechts" und "links" in der Weise verwendet, wie sie zur Richtungsbezeichnung an einem Kraftfahrzeug üblicherweise gebraucht werden. Insbesondere beziehen sich diese Begriffe auf den Einbauzustand der Abgasnachbehandlungseinrichtung am Fahrzeug bzw. auf den normalen Betriebszustand des Fahrzeugs, bei dem es mit seinen Rädern auf einer Fahrbahn bzw. auf dem Gelände steht. "Oben" ist dann von der Fahrbahn weg gerichtet, während "unten" der Fahrbahn zugewandt ist. Unter der Abgasströmungsrichtung wird jeweils die an einer bestimmten Stelle im Abgastrakt herrschende mittlere Abgasströmungsrichtung verstanden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Seitenansicht von rechts eines Traktors mit einer Abgasnachbehandlungseinrichtung ohne Verkleidung gemäß einer Ausführungsform der Erfindung;
- Figur 2: eine Ansicht von rechts vorne auf die Abgasnachbehandlungseinrichtung ohne Verkleidung gemäß einer Ausführungsform der Erfindung;
- Figur 3: eine Ansicht von rechts auf die Abgasnachbehandlungseinrichtung der Figur 2;
- Figur 4: eine Ansicht von vorne auf die Abgasnachbehandlungseinrichtung der Figur 2;
- Figur 5: eine Ansicht von oben auf den Traktor der Figur 1;
- Figur 6: eine Ansicht von rechts vorne auf den Traktor der Figur 1;
- Figur 7: eine Ansicht von rechts vorne auf den Traktor der Figur 1 mit Verkleidung der Abgasnachbehandlungseinrichtung, rechtes Vorderrad mit Kotflügel ausgeblendet;
- Figur 8: eine Ansicht von vorne auf den Traktor der Figur 1, rechtes Vorderrad mit Kotflügel ausgeblendet;
- Figur 9: eine Ansicht von rechts vorne auf die Abgasnachbehandlungseinrichtung ohne Verkleidung gemäß einer weiteren Ausführungsform der Erfindung; und
- Figur 10: eine Seitenansicht von rechts eines Traktors mit einer Abgasnachbehandlungseinrichtung ohne Verkleidung gemäß einer Ausführungsform der Erfindung zur Illustration vorteilhafter Sichtfelder des Fahrers.

Gleiche Elemente sind in allen Figuren mit denselben Bezugszeichen bezeichnet und zum Teil nicht gesondert beschrieben.

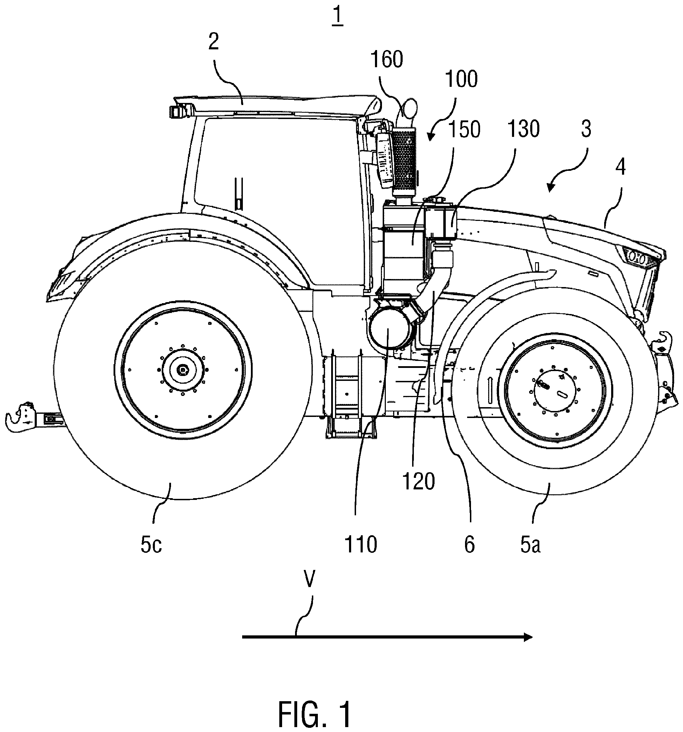

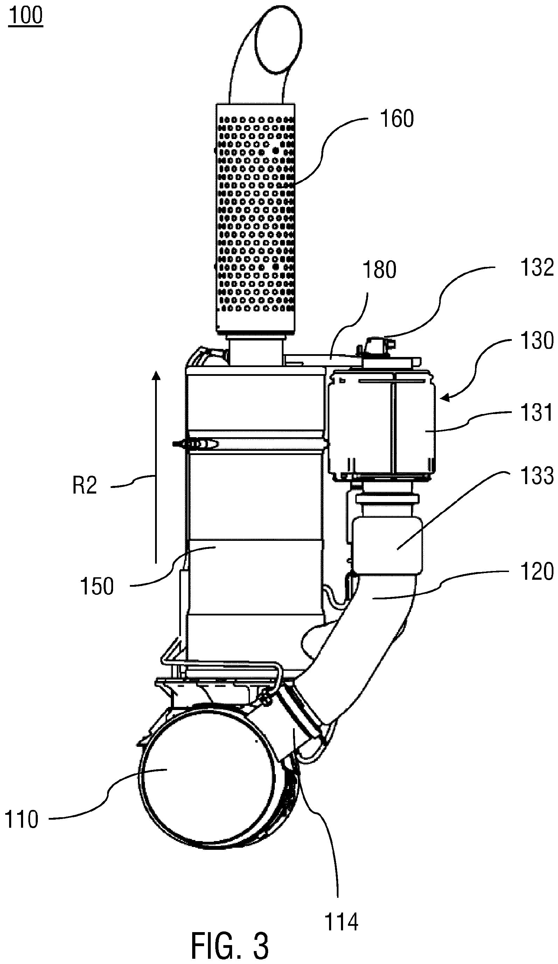

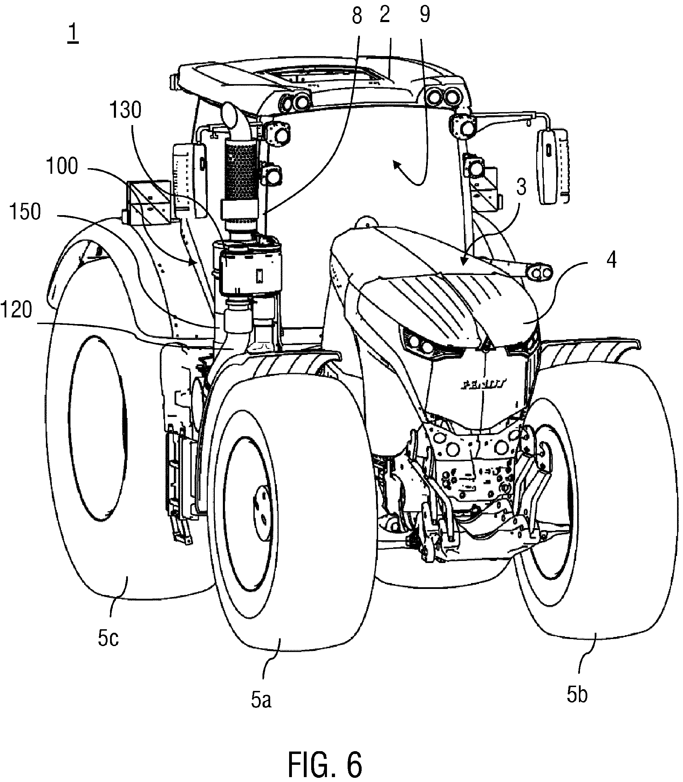

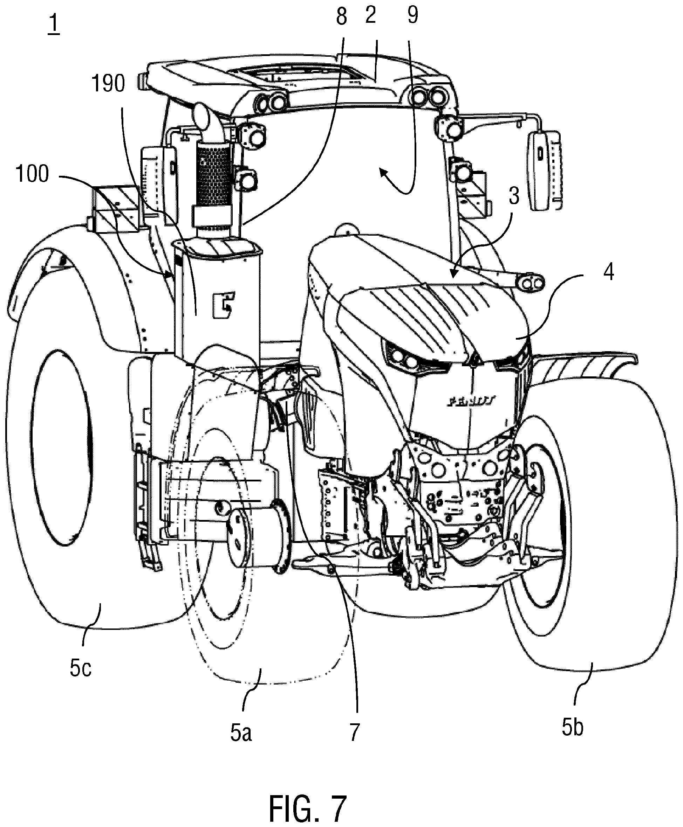

Figur 1 zeigt eine Seitenansicht von rechts eines Traktors 1 mit einer Fahrerkabine 2, einem Verbrennungsmotor 3, der in an sich bekannter Weise von einer Haube 4 überdeckt ist, und einer Abgasnachbehandlungseinrichtung 100. Die Abgasnachbehandlungseinrichtung 100 ist in den Figuren 1 bis 6 und 8 ohne Verkleidung, in der Figur 7 mit Verkleidung 190 gezeigt. Die Vorwärtsfahrtrichtung ist in Figur 1 mit dem Pfeil V angegeben.

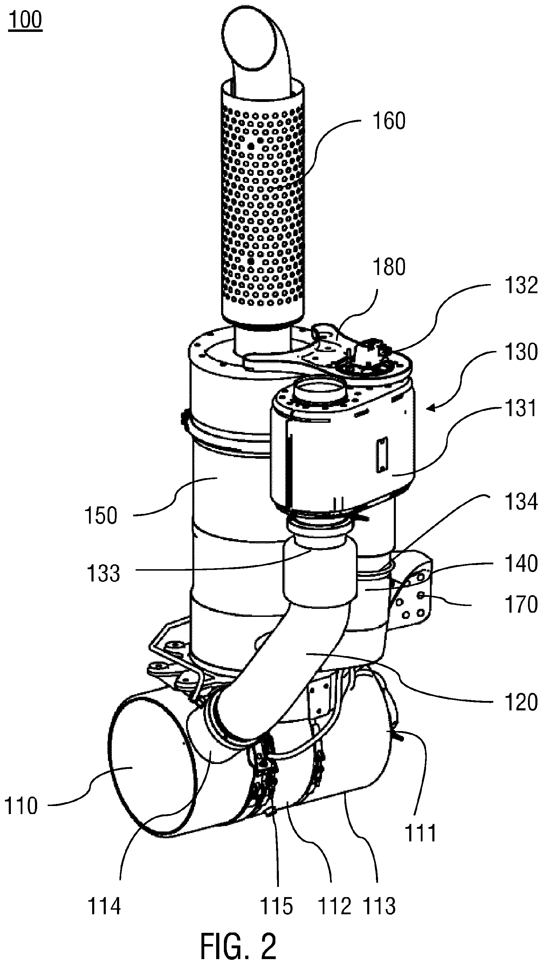

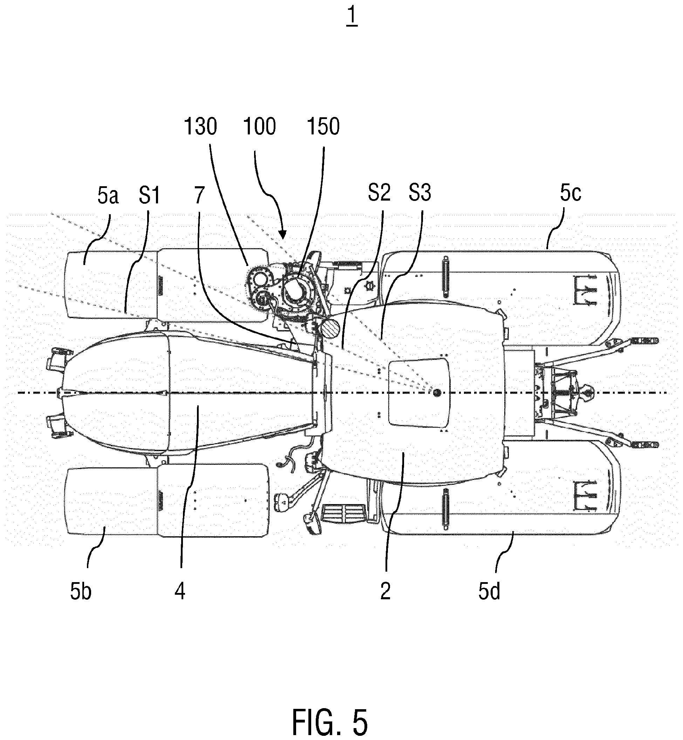

In der nachfolgenden Beschreibung wird ferner Bezug genommen auf die Figuren 2, 3 und 4, die den Aufbau der Abgasnachbehandlungseinrichtung 100 in einer vergrößerten Darstellung zeigen, sowie auf die Figuren 5 bis 8, die weitere Ansichten des Traktors 1 mit der Abgasnachbehandlungseinrichtung 100 zeigen.

Die Abgasnachbehandlungseinrichtung 100 umfasst ein DOC/DPF-Abgasnachbehandlungsmodul 110, in das ein Diesel-Partikelfilter 112 und ein Diesel-Oxidationskatalysator 113 integriert sind. Die Abgasnachbehandlungseinrichtung 100 umfasst eine Mischeinrichtung 130, auch als Mischer bezeichnet, zur Vermischung von Abgas und Reduktionsmittel und einen SCR-Katalysator 150.

Der Traktor 1, der Verbrennungsmotor 3 mit Haube 4 und die einzelnen Komponenten der Abgasnachbehandlungseinrichtung 100 können in an sich bekannter Weise ausgeführt sein und müssen daher vorliegend nicht näher beschrieben werden. Eine Besonderheit der vorgeschlagenen Abgasnachbehandlungseinrichtung 100 liegt in der besonderen räumlichen Anordnung der einzelnen Komponenten 110, 130 und 150 zueinander und deren Anordnung am Fahrzeug bzw. Traktor 1, um eine gute Wärmeableitung einerseits und eine möglichst gute Sicht für den Fahrer andererseits zu ermöglichen.

Nachfolgend wird daher die Anordnung der Komponenten der Abgasnachbehandlungseinrichtung 100 erläutert.

Das DOC/DPF-Abgasnachbehandlungsmodul 110, die Mischeinrichtung 130 und der SCR-Katalysator 150 sind wie folgt in Reihe geschaltet: Der SCR-Katalysator 150 ist in Abgasströmungsrichtung nachfolgend zu der Mischeinrichtung 130 angeordnet. Die Mischeinrichtung 130 ist in Abgasströmungsrichtung nachfolgend zu dem Partikelfilter 112 und dem Oxidationskatalysator 113 angeordnet. Wie in den Figuren 1, 6 und 8 gut erkennbar ist, ist die Abgasnachbehandlungseinrichtung 100 dabei außerhalb der den Verbrennungsmotor 3 abdeckenden Haube 4 angeordnet. Somit sind das DOC/DPF-Abgasnachbehandlungsmodul 110, die Mischeinrichtung 130 und der SCR-Katalysator 150 außerhalb der Haube 4 angeordnet. Insbesondere ist die Abgasnachbehandlungseinrichtung 100 seitlich rechts von der Haube 4 angeordnet, schräg vor der vorderen rechten Ecksäule 8 der Fahrerkabine, um die Beeinträchtigung der Sicht durch die Abgasnachbehandlungseinrichtung 100 möglichst gering zu halten.

Das DOC/DPF-Abgasnachbehandlungsmodul 110 ist über eine Montagehalterung 170, die als Gussteil mit einer Lochstruktur ausgeführt ist, an der Unterseite des SCR-Katalysators 150 festgelegt. Das in Figur 2 gezeigte freie Ende der Montagehalterung 170 ist am Fahrzeugrahmen verschraubt. Das DOC/DPF-Abgasnachbehandlungsmodul 110 ist an seinem Einlass 111 direkt oder über ein weiteres Rohrstück mit einem Kompensator 7, erkennbar in Figur 7, verbunden, der wiederum an den Auslass des Abgasturboladers (nicht gezeigt) des Verbrennungsmotors 3 angeschlossen ist. Der Abgasturbolader befindet sich innerhalb der Haube 4.

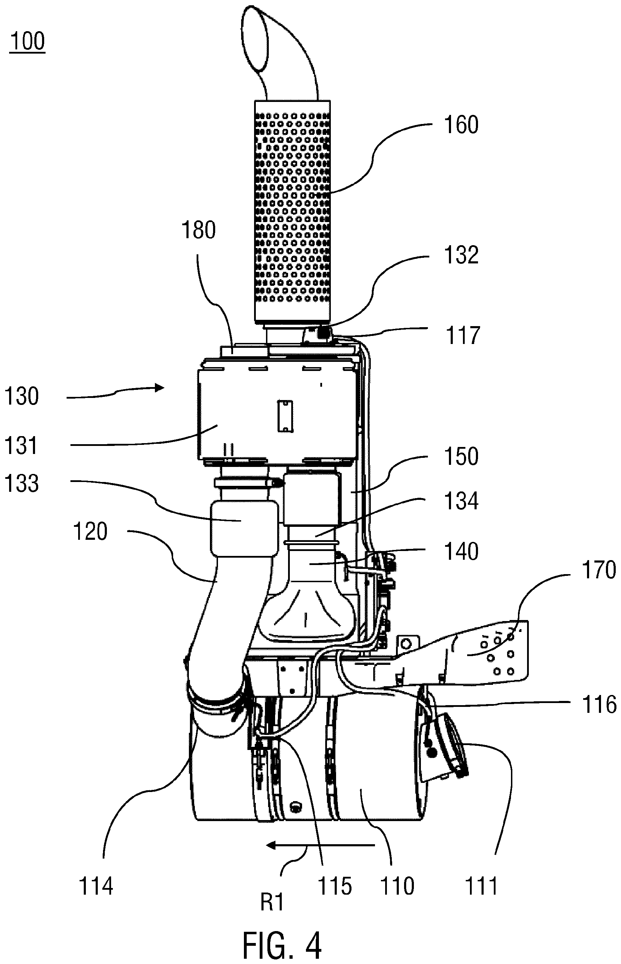

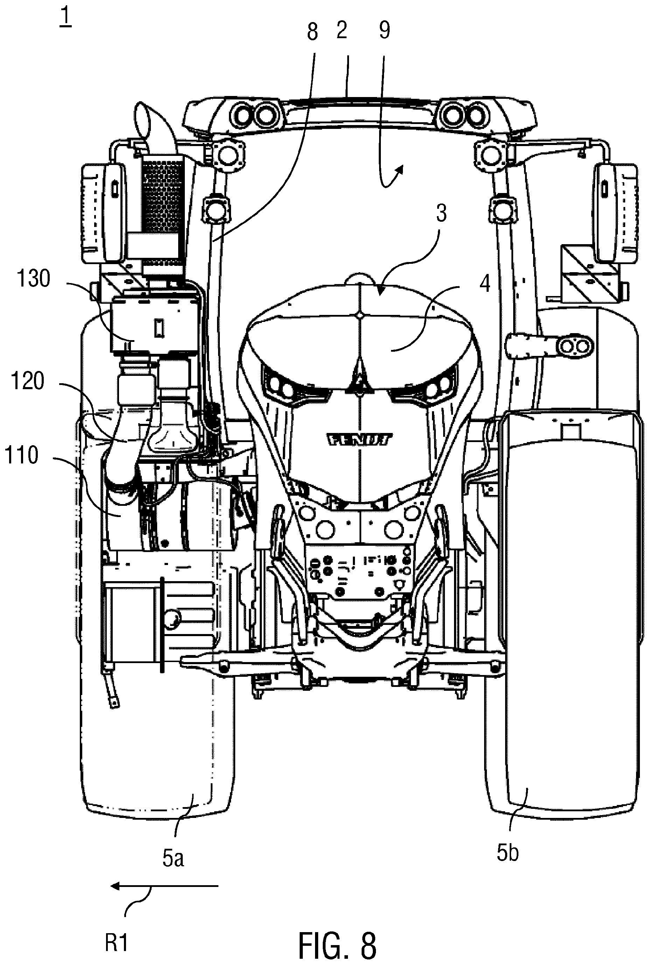

Der Auslass 114 des DOC/DPF-Abgasnachbehandlungsmoduls 110 ist über eine Abgasleitung 120 mit dem Einlass 133 der Mischeinrichtung 130 verbunden. Die Abgasströmungsrichtung R1 beim Durchlaufen des DOC/DPF-Abgasnachbehandlungsmoduls 110 ist somit im Wesentlichen in horizontaler Richtung und senkrecht zur Vorwärtsfahrtrichtung gerichtet, insbesondere von der Fahrzeuginnenseite hin zur Fahrzeugaußenseite gerichtet. Die Richtung R1 ist in den Figuren 4 und 8 illustriert. Am Ende des DOC/DPF-Abgasnachbehandlungsmoduls 110 wird das Abgas aus der Richtung R1 nach oben zum Auslass 114 und weiter über die Leitung 120 zur Mischeinrichtung 130 geleitet.

Eine weitere Besonderheit des gezeigten Ausführungsbeispiels liegt darin, dass die Mischeinrichtung 130, in Vorwärtsfahrtrichtung des Fahrzeugs gesehen, vordem SCR-Katalysator 150 angeordnet ist. Die Mischeinrichtung 130 ist über die Halterung 180 in Form eines Gussteils, das sowohl an der Oberseite des SCR-Katalysators 150 als auch an der Oberseite der Mischeinrichtung 130 verschraubt wird, an der der Fahrzeugvorderseite zugewandten Seite des SCR-Katalysators 150 festgelegt. An der Oberseite der Mischeinrichtung 130 ist ferner ein Injektor 132 zum Eindüsen eines Reduktionsmittels, z. B. wässrige Harnstofflösung, befestigt. Mittels des Injektors kann das Reduktionsmittel in die Mischeinrichtung 130 eingedüst werden. Der Strömungsweg innerhalb der Mischeinrichtung 130 verläuft im Wesentlichen u-förmig - ungeachtet der zusätzlichen Drallbewegungen des Abgasstroms, die der u-förmigen Bewegung überlagert sind. Der Injektor 132 düst das Reduktionsmittel in einen im Wesentlichen nach unten strömenden Abgasstrom ein, d. h. nachdem das Abgas eine Richtungsumkehr in der Mischeinrichtung 130 vollzogen hat.

Die gezeigte Mischeinrichtung ist als sog. Drall-Mischer 130 ausgeführt, dessen Gehäuse 131 lediglich beispielhaft in dem vorliegenden Beispiel an der oberen Gehäusehälfte des SCR-Katalysators 150 angeordnet ist. Der Drall-Mischer hat Drallelemente, z. B. in Form von Flügelöffnungen, die umfangsseitig an einem Abgasrohr (jeweils nicht gezeigt) im Innern des Drall-Mischers 130 der Strömung einen Drall aufdrängen, der zu einer guten Durchmischung und einem gutem Wärmeübergang zwischen Abgas und dem über den Injektor 132 eingespritzten Reduktionsmittel führt und gleichzeitig eine Wandbenetzung mit Reduktionsmittel vermeidet oder zumindest reduziert. Das Auslassrohr 131 der Mischeinrichtung 130 ist an ein Rohr 140 angeschlossen, das das aus der Mischeinrichtung 130 austretende, mit Reduktionsmittel vermischte Abgas zu einem Einlass im unteren Bereich des SCR-Katalysators 150 leitet. Dieses Abgasgemisch durchläuft den SCR-Katalysator in vertikaler Richtung R2 von unten nach oben, wobei die im Abgas enthaltenden Stickoxide selektiv reduziert werden. Über den Endabschnitt 160 wird das aus dem SCR-Katalysator 150 austretende Abgas an die Umwelt abgegeben.

Ferner können mehrere Sensoren an der Abgasnachbehandlungseinrichtung 100 angeordnet sein, beispielsweise ein Drucksensor 115 zur Überwachung des Dieselpartikelfilters und Temperatursensoren 116, 117.

Ein besonderer Vorzug des gezeigten Ausführungsbeispiels liegt darin, dass die gezeigte Anordnung der Module der Abgasnachbehandlungseinrichtung 100, insbesondere die Anordnung des DOC/DPF-Abgasnachbehandlungsmoduls 110 unterhalb des SCR-Katalysators 150 und die Anordnung der Mischeinrichtung, in Fahrtrichtung gesehen, vor dem SCR-Katalysator 150, eine besonders gute Sicht des Fahrer ermöglicht, was beispielsweise in Figur 5 gut erkennbar ist.

Die Anordnung des DOC/DPF-Abgasnachbehandlungsmoduls 110 unterhalb des SCR-Katalysators 150 und die Anordnung der Mischeinrichtung 130, in Fahrtrichtung gesehen, vor dem SCR-Katalysator 150, ermöglichen eine Anordnung der Abgasnachbehandlungseinrichtung 100 seitlich beabstandet zur Haube 4 und schräg vor der vorderen rechten Ecksäule 8 der Fahrerkabine derart, dass eine Sichtlinie S1 (siehe Figur 5) ermöglicht wird, welche vom Kopf eines eine in der Fahrerkabine normale Sitzposition einnehmenden Fahrers ausgeht und über die Frontscheibe 9 an der inneren, unteren Kante eines Vorderrades 5a endet. Diese Sichtlinie S1 ist besonders für den Betrieb des Traktors in Reihenkulturen von Vorteil. Die Sichtlinien S2 und S3 illustrieren einen durch die Abgasnachbehandlungseinrichtung 100 blockierten Sichtkegel des Fahrers. Es ist jedoch erkennbar, dass die Sicht des Fahrer durch die Abgasnachbehandlungseinrichtung 100 darüber hinaus nicht eingeschränkt ist. Insbesondere hat der Fahrer Sicht, gemäß der Sichtlinie S1, auf die untere Innenkante des rechten Vorderrades 5a. Aber auch die Sicht auf im vorderen Bereich des Fahrzeugs angehängte Anbaugeräte wird durch die Abgasnachbehandlung 100 nicht eingeschränkt.

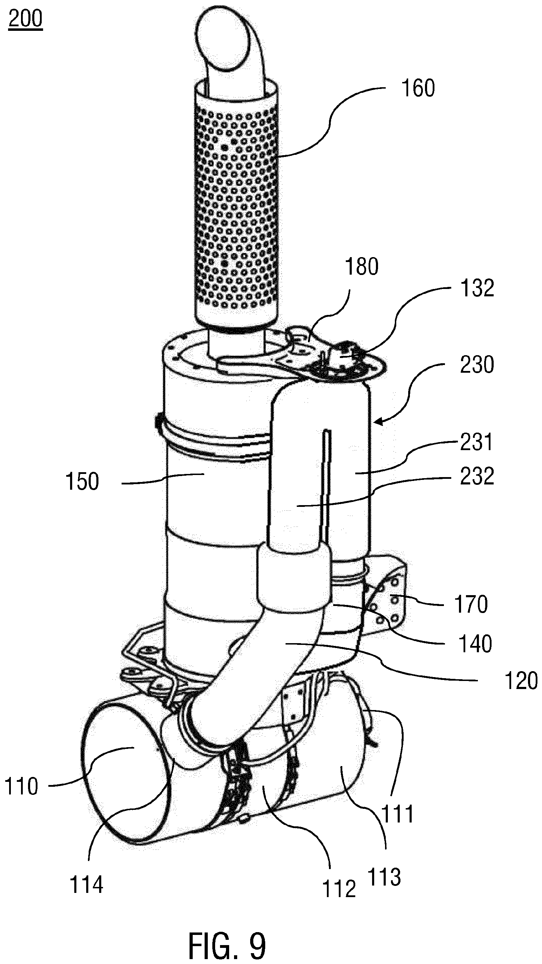

Figur 9 zeigt eine Ansicht von rechts vorne auf die Abgasnachbehandlungseinrichtung ohne Verkleidung gemäß einer weiteren Ausführungsform der Erfindung. Die Besonderheit dieser Ausführungsform liegt lediglich darin, dass die Mischeinrichtung der Abgasnachbehandlungseinrichtung 200 nun als an sich bekannter u-förmiger Rohrmischer 230 ausgeführt ist, mit den beiden Schenkeln 232 und 231. An der Oberseite des Rohrmischer 230 ist wiederum der Injektor 132 angeordnet, der in den Schenkel 231, in dem das Abgas wieder nach unten strömt, das Reduktionsmittel eindüst. Der Rohrmischer 230 ist ebenfalls, in Vorwärtsfahrtrichtung des Fahrzeugs gesehen, vor dem SCR-Katalysator 150 angeordnet und an der der Fahrzeugvorderseite zugewandten Seite des SCR-Katalysators 150 festgelegt.

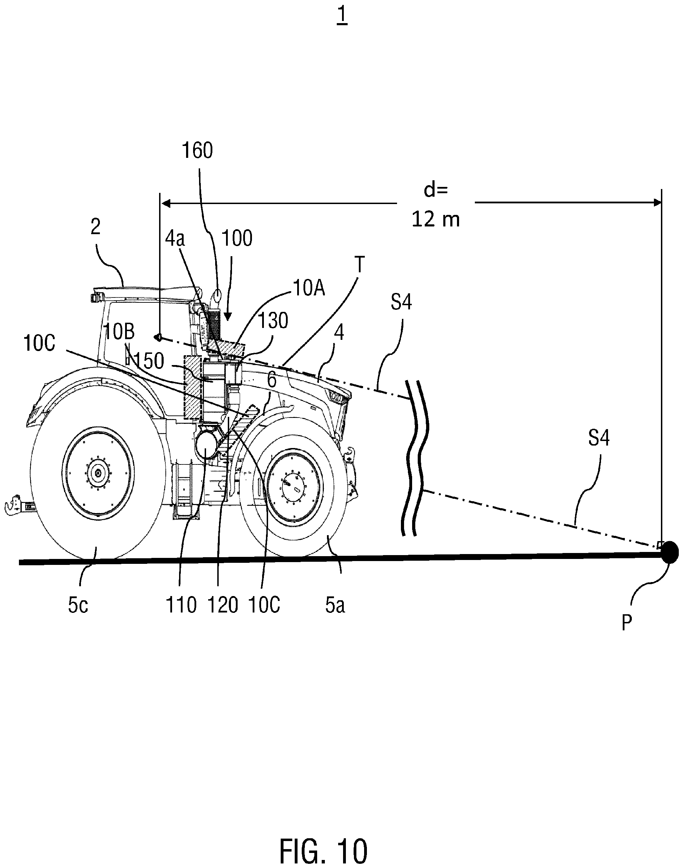

Figur 10 zeigt die Seitenansicht von rechts eines Traktors mit einer Abgasnachbehandlungseinrichtung ohne Verkleidung wie in Figur 1 zur Illustration vorteilhafter Sichtfelder des Fahrers. Vorstehend wurde bereits erwähnt, dass ein besonderer Vorzug der erfindungsgemäßen Anordnung der Komponenten der Abgasnachbehandlungseinrichtung 100 darin besteht, dass eine besonders gute Sicht des Fahrers nach vorne ermöglicht wird.

Da ein oberer Endbereich des SCR-Katalysators 150 und ein oberer Bereich der Mischeinrichtung 130 die Haube nicht überragen bzw. tiefer oder im Wesentlichen auf gleicher Höhe als/wie ein hinterer oberer Endbereich 4a der Haube 4 angeordnet sind, wird ein Freibereich 10A (schematisch durch die schraffierte Fläche 10A dargestellt) in diesem oberen hinteren Endbereich der Haube 4 ermöglicht, in dem sich nur der schmale Endabschnitt 160 des Abgassystems befindet.

Dadurch verdecken der SCR-Katalysator 150 und die Mischeinrichtung 130 nicht die Sicht des Fahrers nach vorne auf die Fahrbahn. Insbesondere wird eine Sichtlinie S4 ermöglicht, welche vom Kopf eines eine in der Fahrerkabine normale Sitzposition einnehmenden Fahrers ausgeht und eine nach vorn abschüssige Tangente auf der Haube bildet, die an der Stelle P die Fahrbahn trifft, die in einem horizontalen Abstand d von höchstens 12 m von der Sitzposition des Fahrers entfernt ist.

Vorstehend wurde ebenfalls bereits erwähnt, dass die Abgasnachbehandlungseinrichtung 100 in Vorwärtsfahrtrichtung gesehen seitlich von der Haube angeordnet ist und schräg vor einer vorderen Ecksäule der Fahrerkabine angeordnet ist. Dadurch wird ein Freibereich 10B im Bereich des unteren seitlichen Fensters der Fahrerkabine 2 ermöglicht, dargestellt durch den schraffierten Bereich 10B. Durch diesen Bereich 10B kann der Fahrer schauen, ohne dass seine Sicht durch die Abgasnachbehandlungseinrichtung 100 verdeckt ist. Dies ist besonders für landwirtschaftliches Arbeiten mit Traktoren von Vorteil.

Ein weiterer vorteilhafter Freiraum 10C ergibt sich durch die Anordnung, dass die Mischeinrichtung 130 in Vorwärtsfahrtrichtung des Fahrzeugs gesehen vor dem SCR-Katalysator 150 angeordnet ist, insbesondere derart, dass die Mischeinrichtung 130 lediglich im Bereich einer oberen Hälfte außen am SCR-Katalysator-Gehäuse 131 angeordnet ist. Bei einer Anordnung des Partikelfilters 112 und des Oxidationskatalysators 113 unterhalb des SCR-Katalysators 150 ergibt sich dadurch ein Freiraum 10C zum benachbarten Vorderrad 5a und Kotflügel. Dieser Bereich 10C kann von der Radkinematik genutzt werden, d. h. beim Lenken und Federn des Vorderrads 5a.

### Bezugszeichenliste

- 1: Fahrzeug, insbesondere Traktor
- 2: Fahrerkabine
- 3: Verbrennungsmotor
- 4: Haube
- 4a: Hinterer oberer Endbereich der Haube
- 5a: Rechtes Vorderrad
- 5b: Linkes Vorderrad
- 5c: Rechtes Hinterrad
- 5d: Linkes Hinterrad
- 6: Kotflügel
- 7: Kompensator
- 8: Rechte vordere Ecksäule der Fahrerkabine
- 9: Frontscheibe
- 10A: Freibereich für Sicht nach vorne
- 10B: Freibereich für Sicht nach schräg vorne durch Seitenfenster
- 10C: Freibereich für Radkinematik
- 100: Abgasnachbehandlungseinrichtung
- 110: DOC/DPF-Abgasnachbehandlungsmodul
- 111: Einlass des DOC/DPF-Abgasnachbehandlungsmoduls
- 112: Diesel-Partikelfilter
- 113: Diesel-Oxidationskatalysator
- 114: Auslass des DOC/DPF-Abgasnachbehandlungsmoduls
- 115: Temperatursensor des Diesel-Partikelfilters
- 116: Temperatursensor
- 117: Temperatursensor
- 120: Abgasrohr
- 130: Mischeinrichtung, insbesondere Drall-Mischer
- 131: Gehäuse
- 132: Injektor
- 133: Einlass der Mischeinrichtung
- 134: Auslass der Mischeinrichtung
- 140: Abgasrohr
- 150: SCR-Katalysator
- 160: Endabschnitt des Abgassystems
- 170: Halterung
- 180: Halterung
- 190: Verkleidung
- 200: Abgasnachbehandlungseinrichtung
- 230: Mischeinrichtung, insbesondere Rohrmischer
- S1 - S4: Sichtlinie
- R1, R2: Abgasströmungsrichtung
- T: Tangentenpunkt an Haube
- P: Schnittpunkt Sichtlinie S4 mit Fahrbahn
- V: Vorwärtsfahrtrichtung

## Patentansprüche

1. Fahrzeug, insbesondere geländegängiges Fahrzeug (1), mit einer Fahrerkabine (2), einem Verbrennungsmotor (3) und einer Abgasnachbehandlungseinrichtung (100; 200), wobei die Abgasnachbehandlungseinrichtung (100; 200) Folgendes umfasst:
einen Partikelfilter (112),
einen Oxidationskatalysator (113),
eine Mischeinrichtung (130; 230) zur Vermischung von Abgas und einem Reduktionsmittel, und
einen SCR-Katalysator (150),
wobei der SCR-Katalysator (150) in Abgasströmungsrichtung nachfolgend zu der Mischeinrichtung (130; 230) angeordnet ist und die Mischeinrichtung (130; 230) in Abgasströmungsrichtung nachfolgend zu dem Partikelfilter (112) und dem Oxidationskatalysator (113) angeordnet ist,
wobei der Partikelfilter (112), der Oxidationskatalysator (113), die Mischeinrichtung (130; 230) und der SCR-Katalysator (150) außerhalb einer den Verbrennungsmotor (3) abdeckenden Haube (4) angeordnet sind, und
wobei die Mischeinrichtung (130; 230), in Vorwärtsfahrtrichtung des Fahrzeugs gesehen, vor dem SCR-Katalysator (150) angeordnet ist und/oder dass die Mischeinrichtung (130; 230) an einer der Fahrzeugvorderseite zugewandten Seite des SCR-Katalysators (150) angeordnet ist.

2. Fahrzeug nach Anspruch 1, **dadurch gekennzeichnet, dass** der Partikelfilter (112) und der Oxidationskatalysator (113) unterhalb des SCR-Katalysators (150) angeordnet sind, insbesondere an einer Unterseite des SCR-Katalysators (150) angeordnet und/oder befestigt sind.

3. Fahrzeug nach einem der vorhergehenden Ansprüche, **dadurch gekennzeichnet, dass** die Abgasnachbehandlungseinrichtung (100; 200) seitlich beabstandet zur Haube (4) des Verbrennungsmotors (3) angeordnet ist, derart, dass eine Sichtlinie (S1) ermöglicht wird, welche vom Kopf eines eine in der Fahrerkabine normale Sitzposition einnehmenden Fahrers ausgeht und an der inneren, unteren Kante eines Vorderrades (5a) endet.

4. Fahrzeug nach einem der vorhergehenden Ansprüche, **dadurch gekennzeichnet, dass** der Partikelfilter (112) und der Oxidationskatalysator (113) in ein DOC/DPF-Abgasnachbehandlungsmodul (110) integriert sind.

5. Fahrzeug nach Anspruch 4, **dadurch gekennzeichnet, dass** das DOC/DPF-Abgasnachbehandlungsmodul (110) über einen Kompensator (7) am Auslass einer Turbine eines Abgas-Turboladers angeordnet ist oder über einen Kompensator stromabwärts eines Diffusors angeordnet ist, der am Auslass einer Turbine eines Abgasturboladers angeordnet ist.

6. Fahrzeug nach einem der vorhergehenden Ansprüche, **dadurch gekennzeichnet,**
a) **dass** die Abgasströmungsrichtung (R1) beim Durchlaufen des Partikelfilters (112) und des Oxidationsfilters (113) im Wesentlichen in horizontaler Richtung und senkrecht zur Vorwärtsfahrtrichtung gerichtet ist, insbesondere von der Fahrzeuginnenseite hin zur Fahrzeugaußenseite gerichtet ist; und/oder
b) **dass** die Abgasströmungsrichtung (R2) beim Durchlaufen des SCR-Katalysators (150) im Wesentlichen in vertikaler Richtung hin zur Fahrzeugoberseite gerichtet ist, und/oder
c) **dass** die Abgasströmungsrichtung beim Durchlaufen der Mischeinrichtung (130; 230) einen u-förmigen Verlauf aufweist.

7. Fahrzeug nach einem der vorhergehenden Ansprüche, **dadurch gekennzeichnet, dass** die Mischeinrichtung (130) lediglich im Bereich einer oberen Hälfte außen am SCR-Katalysator-Gehäuse (131) angeordnet ist.

8. Fahrzeug nach einem der vorhergehenden Ansprüche, **dadurch gekennzeichnet,**
a) **dass** die Abgasströmungsrichtung beim Eintritt in und Ausstritt aus der Mischeinrichtung (130) im Wesentlichen in vertikaler Richtung verläuft; und/oder
b) **dass** der Abgaseinlass (133) und der Abgasauslass (134) der Mischeinrichtung (130) an der Unterseite der Mischeinrichtung (130) angeordnet sind.

9. Fahrzeug nach einem der vorhergehenden Ansprüche, **dadurch gekennzeichnet, dass** die Abgasnachbehandlungseinrichtung einen Injektor (132) zum Eindüsen eines Reduktionsmittels aufweist, der an der Mischeinrichtung (130; 230) angeordnet ist und der ausgebildet ist, ein Reduktionsmittel in die Mischeinrichtung (130; 230) einzudüsen.

10. Fahrzeug nach Anspruch 9, **dadurch gekennzeichnet, dass** der Injektor (132) an einem oberen Endbereich der Mischeinrichtung (130; 230) angeordnet ist und/oder dass der Injektor (132) derart an der Mischeinrichtung (130; 230) angeordnet ist, dass das Reduktionsmittel in einem im Wesentlichen nach unten strömenden Abgasstrom eingedüst wird.

11. Fahrzeug nach einem der vorhergehenden Ansprüche, **dadurch gekennzeichnet, dass** die Abgasnachbehandlungseinrichtung (100; 200) in Vorwärtsfahrtrichtung gesehen
a) seitlich von der Haube (4) angeordnet ist; und/oder
b) schräg vor einer vorderen Ecksäule (8) der Fahrerkabine (2) angeordnet ist.

12. Fahrzeug nach einem der vorhergehenden Ansprüche, **dadurch gekennzeichnet, dass** ein oberer Endbereich des SCR-Katalysators (150) und ein oberer Bereich der Mischeinrichtung (130) tiefer oder im Wesentlichen auf gleicher Höhe als/wie ein hinterer oberer Endbereich (4a) der Haube (4) angeordnet sind, insbesondere derart, dass eine Sichtlinie (S4) ermöglicht wird, welche vom Kopf eines eine in der Fahrerkabine normale Sitzposition einnehmenden Fahrers ausgeht und eine nach vorn abschüssige Tangente auf der Haube bildet, die an einer Stelle (P) die Fahrbahn trifft, die in einem horizontalen Abstand (d) von <= 12 m von der Sitzposition des Fahrers entfernt ist.

## Claims

1. A vehicle, in particular an off-road vehicle (1), with a driver's cab (2), an internal combustion engine (3) and an exhaust gas aftertreatment device (100; 200), the exhaust gas aftertreatment device (100; 200) comprising the following:
a particulate filter (112),
an oxidation catalytic converter (113),
a mixing device (130; 230) for mixing exhaust gas and a reducing agent, and
an SCR catalytic converter (150),
the SCR catalytic converter (150) being arranged downstream of the mixing device (130; 230) in the exhaust gas flow direction, and the mixing device (130; 230) being arranged downstream of the particulate filter (112) and the oxidation catalytic converter (113) in the exhaust gas flow direction,
the particulate filter (112), the oxidation catalytic converter (113), the mixing device (130; 230) and the SCR catalytic converter (150) being arranged outside a bonnet (4) which covers the internal combustion engine (3), and the mixing device (130; 230) being arranged in front of the SCR catalytic converter (150) as viewed in the forward travelling direction of the vehicle, and/or in that the mixing device (130; 230) is arranged on a side of the SCR catalytic converter (150), which side faces the vehicle front side.

2. The vehicle according to Claim 1, **characterized in that** the particulate filter (112) and the oxidation catalytic converter (113) are arranged below the SCR catalytic converter (150), in particular are arranged on and/or fastened to an underside of the SCR catalytic converter (150).

3. The vehicle according to either of the preceding claims, **characterized in that** the exhaust gas aftertreatment device (100; 200) is arranged spaced apart laterally from the bonnet (4) of the internal combustion engine (3), in such a way that a sight line (S1) is made possible which emanates from the head of a driver assuming a normal seated position in the driver's cab and ends at the inner, lower edge of a front wheel (5a).

4. The vehicle according to one of the preceding claims, **characterized in that** the particulate filter (112) and the oxidation catalytic converter (113) are integrated into a DOC/DPF exhaust gas aftertreatment module (110).

5. The vehicle according to Claim 4, **characterized in that** the DOC/DPF exhaust gas aftertreatment module (110) is arranged via a compensator (7) at the outlet of a turbine of an exhaust gas turbocharger or is arranged via a compensator downstream of a diffuser which is arranged at the outlet of a turbine of an exhaust gas turbocharger.

6. The vehicle according to one of the preceding claims, **characterized**
a) **in that** the exhaust gas flow direction (R1) when passing through the particulate filter (112) and the oxidation filter (113) is directed substantially in the horizontal direction and perpendicularly with respect to the forward travelling direction, in particular is directed from the vehicle inner side towards the vehicle outer side; and/or
b) **in that** the exhaust gas flow direction (R2) when passing through the SCR catalytic converter (150) is directed substantially in the vertical direction towards the vehicle upper side, and/or
c) **in that** the exhaust gas flow direction when passing through the mixing device (130; 230) has a U-shaped course.

7. The vehicle according to one of the preceding claims, **characterized in that** the mixing device (130) is arranged merely in the region of an upper half on the outside on the SCR catalytic converter housing (131).

8. The vehicle according to one of the preceding claims, **characterized**
a) **in that** the exhaust gas flow direction during the entry into and exit from the mixing device (130) run substantially in the vertical direction; and/or
b) **in that** the exhaust gas inlet (133) and the exhaust gas outlet (134) of the mixing device (130) are arranged on the underside of the mixing device (130).

9. The vehicle according to one of the preceding claims, **characterized in that** the exhaust gas aftertreatment device has an injector (132) for the injection of a reducing agent, which injector (132) is arranged on the mixing device (130; 230) and is configured to inject a reducing agent into the mixing device (130; 230).

10. The vehicle according to Claim 9, **characterized in that** the injector (132) is arranged on an upper end region of the mixing device (130; 230), and/or **in that** the injector (132) is arranged on the mixing device (130; 230) in such a way that the reducing agent is injected into an exhaust gas stream which flows substantially downwards.

11. The vehicle according to one of the preceding claims, **characterized in that**, as viewed in the forward travelling direction, the exhaust gas aftertreatment device (100; 200)
a) is arranged to the side of the bonnet (4); and/or
b) is arranged obliquely in front of a front corner pillar (8) of the driver's cab (2).

12. The vehicle according to one of the preceding claims, **characterized in that** an upper end region of the SCR catalytic converter (150) and an upper region of the mixing device (130) are arranged lower than or substantially at the same height as a rear upper end region (4a) of the bonnet (4), in particular in such a way that a sight line (S4) is made possible which emanates from the head of a driver assuming a normal seated position in the driver's cab and forms a tangent on the bonnet, which tangent slopes down to the front and meets the roadway at a point (P) which is at a horizontal spacing (d) of ≤ 12 m from the seated position of the driver.

## Revendications

1. Véhicule, notamment véhicule tout-terrain (1), comprenant une cabine de conduite (2), un moteur à combustion interne (3) et un dispositif de post-traitement du gaz d'échappement (100 ; 200), le dispositif de post-traitement du gaz d'échappement (100 ; 200) comprenant :
un filtre à particules (112),
un catalyseur d'oxydation (113),
un dispositif de mélange (130 ; 230) pour mélanger le gaz d'échappement et un agent réducteur, et
un catalyseur SCR (150),
le catalyseur SCR (150) étant agencé à la suite du dispositif de mélange (130 ; 230) dans la direction d'écoulement du gaz d'échappement, et le dispositif de mélange (130 ; 230) étant agencé à la suite du filtre à particules (112) et du catalyseur d'oxydation (113) dans la direction d'écoulement du gaz d'échappement,
le filtre à particules (112), le catalyseur d'oxydation (113), le dispositif de mélange (130 ; 230) et le catalyseur SCR (150) étant agencés à l'extérieur d'un capot (4) recouvrant le moteur à combustion interne (3), et
le dispositif de mélange (130 ; 230) étant agencé avant le catalyseur SCR (150), tel que vu dans la direction de marche avant du véhicule, et/ou en ce que le dispositif de mélange (130 ; 230) est agencé sur un côté du catalyseur SCR (150) tourné vers le côté avant du véhicule.

2. Véhicule selon la revendication 1, **caractérisé en ce que** le filtre à particules (112) et le catalyseur d'oxydation (113) sont agencés sous le catalyseur SCR (150), notamment sont agencés et/ou fixés sur un côté inférieur du catalyseur SCR (150).

3. Véhicule selon l'une quelconque des revendications précédentes, **caractérisé en ce que** le dispositif de post-traitement du gaz d'échappement (100 ; 200) est agencé latéralement à distance du capot (4) du moteur à combustion interne (3), de manière à permettre une ligne de vision (S1) qui part de la tête d'un conducteur occupant une position assise normale dans la cabine de conduite et qui se termine au niveau du bord inférieur intérieur d'une roue avant (5a).

4. Véhicule selon l'une quelconque des revendications précédentes, **caractérisé en ce que** le filtre à particules (112) et le catalyseur d'oxydation (113) sont intégrés dans un module de post-traitement du gaz d'échappement DOC/DPF (110).

5. Véhicule selon la revendication 4, **caractérisé en ce que** le module de post-traitement du gaz d'échappement DOC/DPF (110) est agencé par le biais d'un compensateur (7) à la sortie d'une turbine d'un turbocompresseur du gaz d'échappement ou est agencé par le biais d'un compensateur en aval d'un diffuseur qui est agencé à la sortie d'une turbine d'un turbocompresseur du gaz d'échappement.

6. Véhicule selon l'une quelconque des revendications précédentes, **caractérisé en ce que**
a) la direction d'écoulement du gaz d'échappement (R1) lors du passage à travers le filtre à particules (112) et le filtre d'oxydation (113) est dirigée essentiellement dans la direction horizontale et perpendiculaire à la direction de marche avant, notamment est dirigée depuis le côté intérieur du véhicule vers le côté extérieur du véhicule ; et/ou
b) la direction d'écoulement du gaz d'échappement (R2) lors du passage à travers le catalyseur SCR (150) est dirigée essentiellement dans la direction verticale vers le côté supérieur du véhicule, et/ou
c) la direction d'écoulement du gaz d'échappement lors du passage à travers le dispositif de mélange (130 ; 230) présente une allure en forme en U.

7. Véhicule selon l'une quelconque des revendications précédentes, **caractérisé en ce que** le dispositif de mélange (130) est agencé uniquement dans la zone d'une moitié supérieure à l'extérieur du boîtier du catalyseur SCR (131).

8. Véhicule selon l'une quelconque des revendications précédentes, **caractérisé en ce que**
a) la direction d'écoulement du gaz d'échappement à l'entrée et à la sortie du dispositif de mélange (130) s'étend essentiellement dans la direction verticale ; et/ou
b) l'entrée de gaz d'échappement (133) et la sortie de gaz d'échappement (134) du dispositif de mélange (130) sont agencées sur le côté inférieur du dispositif de mélange (130).

9. Véhicule selon l'une quelconque des revendications précédentes, **caractérisé en ce que** le dispositif de post-traitement du gaz d'échappement présente un injecteur (132) pour injecter un agent réducteur, qui est agencé sur le dispositif de mélange (130 ; 230) et qui est configuré pour injecter un agent réducteur dans le dispositif de mélange (130 ; 230).

10. Véhicule selon la revendication 9, **caractérisé en ce que** l'injecteur (132) est agencé sur une zone d'extrémité supérieure du dispositif de mélange (130 ; 230) et/ou **en ce que** l'injecteur (132) est agencé sur le dispositif de mélange (130 ; 230) de telle sorte que l'agent réducteur est injecté dans un courant de gaz d'échappement s'écoulant essentiellement vers le bas.

11. Véhicule selon l'une quelconque des revendications précédentes, **caractérisé en ce que** le dispositif de post-traitement du gaz d'échappement (100 ; 200) tel que vu dans la direction de marche avant
a) est agencé latéralement par rapport au capot (4) ; et/ou
b) est agencé en biais devant une colonne d'angle avant (8) de la cabine de conduite (2).

12. Véhicule selon l'une quelconque des revendications précédentes, **caractérisé en ce qu'**une zone d'extrémité supérieure du catalyseur SCR (150) et une zone supérieure du dispositif de mélange (130) sont agencées plus bas ou essentiellement à la même hauteur qu'une zone d'extrémité supérieure arrière (4a) du capot (4), notamment de manière à permettre une ligne de vision (S4) qui part de la tête d'un conducteur occupant une position assise normale dans la cabine de conduite et qui forme une tangente inclinée vers l'avant sur le capot qui rencontre la chaussée à un emplacement (P) qui est éloigné d'une distance horizontale (d) de <= 12 m de la position assise du conducteur.
